# EUROPÄISCHE PATENTANMELDUNG

(11) **EP 0 641 105 A2**
(43) Veröffentlichungstag der Anmeldung: **01.03.1995**
(21) Anmeldenummer: 94202455.5
(22) Anmeldetag: 29.08.1994
(51) Int. Cl.: H04L 12/42, H04L 12/56, H04L 12/18

(54) **Lokales, nach dem asynchronen Transfermodus (ATM) arbeitendes Netzwerk**

(30) Priorität: 28.08.1993 DE 4329048
(71) Anmelder: Philips Patentverwaltung GmbH, 22335 Hamburg (DE); PHILIPS ELECTRONICS N.V., 5621 BA Eindhoven (NL)
(72) Erfinder: Yonggang, Du, Dr.-Ing., D-20097 Hamburg (DE)
(74) Vertreter: Volmer, Georg, Dipl.-Ing.

(57) **Zusammenfassung**

Die Erfindung bezieht sich auf ein lokales, nach dem asynchronen Transfermodus (ATM) arbeitendes Netzwerk mit mehreren Stationen (1 bis 4), die jeweils über eine Netzwerkschnittstelle (5 bis 8), welche eine Koppelvorrichtung (12) und eine Steueranordnung (25) enthält, mit Sende- und Empfangs-Ringanschlüssen (17, 20) gekoppelt sind und die zur Übertragung von anwenderbezogene Informationen enthaltene Anwenderzellen und wenigstens Signalisierungsinformationen enthaltene Kontrollzellen vorgesehen sind. Die einer Sendestation zugeordnete Steueranordnung (25) ist nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen, die in ihrem Informationsfeld wenigstens eine Information über die Anwender, die Adresse der Sendestation und eine anwenderbezogene Kennung für eine Rückverbindung enthält. Wenigstens eine einer Empfangsstation zugeordnete Steueranordnung (25) ist nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle vorgesehen, die in ihrem Informationsfeld wenigstens eine Angabe über die Adresse der zugeordneten Empfangsstation und eine anwenderbezogene Kennung für die Hinverbindung enthält.

## Beschreibung

Die Erfindung bezieht sich auf ein lokales, nach dem asynchronen Transfermodus (ATM) arbeitendes Netzwerk mit mehreren Stationen, die jeweils über eine Netzwerkschnittstelle, welche eine Koppelvorrichtung und eine Steueranordnung enthält, mit Sende- und Empfangs-Ringanschlüssen gekoppelt sind und die zur Übertragung von anwenderbezogene Informationen enthaltene Anwenderzellen und wenigstens Signalisierungsinformationen enthaltene Kontrollzellen vorgesehen sind.

Ein lokales Netzwerk, welches nach dem asynchronen Transfermodus (ATM) arbeitet, ist aus der Veröffentlichung "Ohne Chips nichts los - Standard-Chips für ATM-Systeme sind im Kommen" von Bernd Reder, Elektronik 1/1993, Seiten 66 bis 75, bekannt. In diesem Übersichtsaufsatz wird der gegenwärtige Stand bei der Entwicklung von integrierten Schaltungen für Anwendungen in lokalen Netzwerken diskutiert, die nach dem asynchronen Transfermodus (ATM) arbeiten. Jede Station ist dabei über eine Netzwerkschnittstelle mit den Ringanschlüssen des lokalen Netzwerkes verbunden. Zur Steuerung des ATM-Zellstromes werden in der Netzwerkschnittstelle Koppelvorrichtungen (switches) verwendet.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (z. B. 53 Bytes) aufweist. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Wie in dem lokalen Netzwerk ein Verbindungsaufbau und Verbindungsabbau (Signalisierung) zwischen zwei oder mehreren Stationen oder Netzwerkschnittstellen vorgenommen wird, ist aus der oben genannten Schrift nicht zu entnehmen.

Der Erfindung liegt daher die Aufgabe zugrunde, ein lokales, nach dem asynchronen Transfermodus arbeitendes Netzwerk zu schaffen, bei welchem ein auf einfache Weise vorzunehmender Verbindungsaufbau durchgeführt wird.

Die Erfindung wird durch ein lokales, nach dem asynchronen Transfermodus arbeitendes Netzwerk der eingangs genannten Art dadurch gelöst,
daß die einer Sendestation zugeordnete Steueranordnung nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen ist, die in ihrem Informationsfeld wenigstens eine Information über die Anwender, die Adresse der Sendestation und eine anwenderbezogene Kennung für eine Rückverbindung enthält, und daß wenigstens eine einer Empfangsstation zugeordnete Steueranordnung nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle vorgesehen ist, die in ihrem Informationsfeld wenigstens eine Angabe über die Adresse der zugeordneten Empfangsstation und eine anwenderbezogene Kennung für die Hinverbindung enthält.

Jede Station und jede Netzwerkschnittstelle des erfindungsgemäßen lokalen Netzwerks erzeugen Kontrollzellen, mit denen ein Verbindungsaufbau realisiert wird. Einerseits werden zwischen einer Station und einer zugeordneten Netzwerkschnittstelle Kontrollzellen für den Verbindungsaufbau und andererseits zwischen zwei oder mehreren Netzwerkschnittstellen solche Kontrollzellen übertragen.

Wenn ein Verbindungsaufbau zwischen einem Anwender einer ersten Station und dem Anwender einer zweiten Station durchgeführt worden ist, liegt eine Einzel-Verbindung (unicast connection) vor. Nach einem Verbindungsaufbau zwischen einem ersten und mehreren weiteren Anwendern ist eine Mehrfach-Verbindung (multicast connection) vorhanden. Unter einem Anwender ist z.B. ein Benutzer eines Programms in einer Station, ein Programm selber, gespeicherte Daten (Station als Datenbank) oder auch einfach Fernsprechteilnehmer zu verstehen.

Wird von einem Anwender einer Sendestation ein Verbindungswunsch mit einem Anwender einer Empfangsstation des lokalen Netzwerkes zur zugeordneten Netzwerkschnittstelle übermittelt, wird zuerst in der Netzwerkschnittstelle geprüft, ob eine solche Verbindung möglich ist. Kann eine solche Verbindung nicht vorgenommen werden, wird eine Kontrollzelle von der Steueranordnung der Netzwerkschnittstelle zur Sendestation gesendet, die eine Information über die Zurückweisung des Verbindungswunsches enthält. Im anderen Fall sendet die Steueranordnung eine Kontrollzelle zur Netzwerkschnittstelle der Empfangsstation, mit der die Verbindung aufgebaut werden soll. Im Informationsfeld der Kontrollzelle ist wenigstens die Information über die beiden Anwender, die Adresse der zugeordneten Station und eine anwenderbezogene Kennung für die Rückverbindung von der Empfangsstation zur zugeordneten Station enthalten. Werden später Zellen, die im Kopffeld die anwenderbezogene Kennung enthalten, von einer Sendestation zu einer Empfangsstation übertragen, so erkennt die Koppelvorrichtung anhand der Kennung und der Adresse, wie die empfangene Zelle weiterverarbeitet werden soll.

Erhält die einer Empfangsstation zugeordnete Steueranordnung eine Kontrollzelle einer einer Sendestation zugeordneten Steueranordnung mit einem Verbindungswunsch eines Anwenders der Sendestation, so prüft die der Empfangsstation zugeordnete Steueranordnung zuerst, ob eine solche Verbindung möglich ist. Ist eine solche Verbindung nicht möglich, wird der der Sendestation zugeordneten Steueranordnung eine Kontrollzelle gesendet, die eine Zurückweisung der Verbindung enthält. Im anderen Fall wird eine Kontrollzelle erzeugt, die zur Sendesstation gesendet wird und die im Informationsfeld eine Adresse der Empfangsstation und eine anwenderbezogene Kennung für die Hinverbindung von der Sende- zur Empfangstation beinhaltet. Die anwenderbezogene Kennung kann entweder in der Sendestation oder in der Empfangsstation erzeugt werden.

Bei dem Aufbau einer Mehrfach-Verbindung werden den den Empfangsstationen zugeordneten Steueranordnungen von der der Sendestation zugeordneten Steueranordnung jeweils Kontrollzellen auf die gleiche Weise übermittelt. Die Steueranordnung jeder Netzwerkschnittstelle einer Empfangsstation bestätigt den erfolgreichen Verbindungsaufbau oder gibt an, daß eine Verbindung nicht aufgebaut werden kann.

Bei einer Einzel-Verbindung erzeugt die der Sendestation zugeordnete Steueranordnung eine anwenderbezogene Kennung für die Rückverbindung von der Netzwerkschnittstelle der Empfangsstation zur Netzwerkschnittstelle der Sendestation. Für die Hinverbindung wird bei einer Einzel-Verbindung von der der Empfangsschaltung zugeordneten Steueranordnung eine anwenderbezogene Kennung erzeugt. Hierbei ist die einer Empfangsstation zugeordnete Steueranordnung nach Empfang einer Kontrollzelle mit einem Verbindungswunsch eines Anwenders der Sendestation mit der Empfangsstation bei einer durchführbaren Einzel-Verbindung zur Bestimmung der anwenderbezogenen Kennung für die Hinverbindung der Sendestation zur Empfangsstation und zur Erzeugung einer zur Sendestation zu sendenden Kontrollzelle wenigstens mit der anwenderbezogenen Kennung vorgesehen.

Bei einer Mehrfach-Verbindung wird für die Rückverbindungen von den Empfangstationen zu der Sendestation ebenso wie bei der Einzel-Verbindung eine anwenderbezogene Kennung den jeder Empfangsstationen zugeordneten Steueranordnungen mitgeteilt. Für die Hinverbindungen von der Sendestation zu den Empfangsstationen kann beispielsweise wie bei der Einzel-Verbindung eine anwenderbezogene Kennung von den jeder Empfangsstation zugeordneten Steueranordnung der der Sendestation zugeordneten Steueranordnung übermittelt werden. Als schnellere Methode hat sich jedoch herausgestellt, wenn die Steueranordnung, die der Sendeschaltung zugeordnet ist, auch diese Kennung bildet und diesen den jeder Empfangsstation zugeordneten Steueranordnungen überträgt.

Diese Weiterbildung der Erfindung ist durch folgende Merkmale gekennzeichnet:
Die einer Sendestation zugeordnete Steueranordnung ist nach Empfang einer Kontrollzelle mit einem Verbindungswunsch eines Anwenders der Sendestation zu jeweils wenigstens einem Anwender mehrerer Empfangsstationen bei einer durchführbaren Mehrfach-Verbindung zur Bestimmung der anwenderbezogenen Kennungen für die Hin- und Rückverbindungen der Sendestation zu den Empfangsstationen und zur Erzeugung von zu den Empfangsstationen zu sendenden Kontrollzellen vorgesehen, die jeweils wenigstens die anwenderbezogenen Kennungen enthalten.
Die einer Empfangsstation zugeordnete Steueranordnung ist nach Empfang einer Kontrollzelle mit einem Verbindungswunsch eines Anwenders der Sendestation und dieser und weiteren Empfangsstationen bei einer durchführbaren Verbindung mit der Empfangsstation zur Speicherung der anwenderbezogenen Kennung und zur Erzeugung einer zur Sendestation zu sendenden Kontrollzelle mit einer Verbindungsbestätigung vorgesehen.

Die anwenderbezogene Kennung für den Hinkanal kann beispielsweise aus einer individuell vergebenen Nummer der der Sendestation zugeordneten Steueranordnung und einer eindeutigen Nummer für den Anwender der Sendestation zusammengesetzt sein.

Beim Verbindungsaufbau für eine Mehrfach-Verbindung erzeugt die der Sendestation zugeordnete Steueranordnung für jede Empfangsstation nacheinander Kontrollzellen, die jeweils wenigstens eine anwenderbezogene Kennung für die Hin- und Rückverbindung enthalten.

Wenn eine Verbindung zwischen einer Sende- oder Empfangsstation nicht möglich ist, erzeugt die der jeweiligen Station zugeordnete Steueranordnung eine Kontrollzelle mit einer Mitteilung über die Zurückweisung des Verbindungswunsches. Diese Mitteilung kann z.B. von der der Sendestation zugeordneten Steueranordnung zur Sendestation übermittelt werden, wenn z.B. die für die Verbindung notwendigen Resourcen nicht vorhanden sind. Eine solche Ablehnung kann auch von einer Steueranordnung, die einer Empfangsstation zugeordnet ist, zu einer Sendestation übertragen werden, wenn beispielsweise der gewünschte Anwender nicht angesprochen werden kann oder die Station abgeschaltet ist.

In einer Ausführungsform einer Netzwerkschnittstelle enthält die Koppelvorrichtung jeder Netzwerkschnittstelle Empfangsschaltungen, Wegetabellen und ein Koppelfeld. Die Empfangsschaltung dient dabei wenigstens zur Entnahme der Kennung und der Adresse aus dem Kopffeld einer eintreffenden Zelle und zur Entnahme von Steuerungsinformationen über die Bearbeitung und Weiterleitung der eingetroffenen Zelle anhand der Kennung und Adresse aus der Wegetabelle.

Anhand der Kennung und der Adresse, mit der die Wegetabelle adressiert wird, wird aus der Wegetabelle eine Information über die weitere Bearbeitung und den weiteren Weg der Zelle entnommen. So kann beispielsweise aus der Tabelle entnommen werden, wohin die Zelle weitergeleitet wird und ob sie für eine Lieferung zu einer weiteren Station kopiert werden soll.

Bei dem Aufbau einer Mehrfach-Verbindung wird der Inhalt der Wegetabelle verändert. Hierbei ist die einer Empfangsstation zugeordnete Steueranordnung nach Eintreffen einer Kontrollzelle für eine Mehrfach-Verbindung
- zur Entnahme eines Bearbeitungsmodus über die Weiterleitung von Anwenderzellen, der Kennung und der Adresse aus dem Informationsfeld der Kontrollzelle und
- zur Abspeicherung des Bearbeitungsmodus unter der Wegetabellen-Adresse der Kennung und der Adresse in der mit den Empfangs-Ringanschlüssen gekoppelten Wegetabelle vorgesehen.
Aus der Kontrollzelle wird also die Kennung und die Adresse entnommen, die eine Speicheradresse (Wegetabellen-Adresse) darstellen. Unter dieser Speicheradresse wird eingetragen was mit einer eintreffenden Anwenderzelle, die zu einer Mehrfach-Verbindung gehört, geschieht. Beispielsweise wird die Anwenderzelle zur Station weitergeleitet und für die nächste Station, die an der Mehrfach-Verbindung beteiligt ist, kopiert. Hierbei muß dann auch die Adresse im Kopffeld verändert werden.

Bei einer Mehrfach-Verbindung ist es erforderlich, das eine Anwenderzelle in einer Netzwerschnittstelle einer Empfangsstation zwischen der Sendestation und der letzen Empfangsstation jeweils kopiert wird.

In der Netzwerkschnittstelle, die der letzten Empfangsstation in der Kette von Empfangsstationen zugeordnet ist, wird die eingetroffene Anwenderzelle nur an die Empfangsstation weitergeleitet und nicht kopiert. Die der letzten Empfangsstation in der Mehrfach-Verbindung zugeordnete Steueranordnung ist also zur Abspeicherung eines Bearbeitungsmodus in die mit dem Empfangs-Ringanschluß gekoppelte Wegetabelle vorgesehen, bei dem die zu empfangende Anwenderzelle zur Weiterleitung an die Empfangsstation bestimmt ist. Die einer anderen Empfangsstation in der Mehrfach-Verbindung zugeordnete Steueranordnung ist zur Abspeicherung eines Bearbeitungsmodus in die mit dem Empfangs-Ringanschluß gekoppelte Wegetabelle vorgesehen, bei dem die zu empfangende Anwenderzelle zur Weiterleitung an die Empfangsstation, zur Verdopplung der Anwenderzelle und zur Veränderung der Adresse in der verdoppelten Anwenderzelle bestimmt ist.

Bei einem Abbau einer Verbindung werden ebenfalls Kontrollzellen zwischen den einzelnen Steueranordnungen übertragen. Hierbei ist die an einer Einzel-Verbindung beteiligte Steueranordnung einer Netzwerkschnittstelle nach Empfang einer Abbauforderung von einem Anwender der zugeordneten Station zur Sendung einer Kontrollzelle mit einer Meldung über den Verbindungsabbau an die andere an der Einzel-Verbindung beteiligten Steueranordnung der anderen Netzwerkschnittstelle und zum Empfang einer Kontrollzelle mit einer Bestätigung über den Verbindungsabbau der anderen Steueranordnung vorgesehen.

Bei einer Mehrfach-Verbindung ist die an dieser Mehrfach-Verbindung beteiligte und einer Sendestation zugeordnete Steueranordnung nach Empfang einer Abbauforderung von einem Anwender der Sendestation zur Sendung einer Kontrollzelle mit einer Meldung über den Verbindungsabbau an die den Empfangsstationen zugeordneten Steueranordnungen und zum Empfang von Kontrollzellen mit einer Bestätigung über den Verbindungsabbau der jeder Empfangsstation zugeordneten Steueranordnung vorgesehen.

Beim Abbau einer Mehrfach-Verbindung ist es erforderlich, daß die beim Aufbau der Mehrfach-Verbindung durchgeführten Einträge wieder rückgängig gemacht werden. Es ist also vorgesehen, daß nach dem Verbindungsabbau einer Mehrfach-Verbindung die an der Mehrfach-Verbindung beteiligten den Empfangsstationen zugeordneten Steueranordnungen jeweils den unter der Adresse einer Kennung und Adresse abgespeicherten Bearbeitungsmodus in der zugeordneten mit dem jeweiligen Empfangs-Ringanschluß gekoppelten Wegetabelle ändern.

Wird beim Aufbau einer Mehrfach-Verbindung der Verbindungswunsch von einer Empfangsstation zurückgewiesen, so kann entweder der Verbindungsaufbau von der der Sendestation zugeordneten Steueranordnung zurückgewiesen werden oder der Verbindungsaufbau ohne diese Empfangsstation durchgeführt werden. Es müssen dann von der der Sendestation zugeordneten Steueranordnung nochmals Kontrollzellen mit veränderten Kennungen an die Steueranordnungen geliefert werden, welche den Empfangsstationen zugeordnet sind, die vor der die Verbindung zurückgewiesenen Empfangsstation liegen. Die gleiche Prozedur wird durchgeführt, wenn eine Abbaumeldung einer Empfangsstation zur Sendestation übermittelt wird.

Es ist also bei einer Mehrfach-Verbindung die einer Sendestation zugeordnete Steueranordnung nach Empfang einer Kontrollzelle mit einer Zurückweisung einer Verbindung oder einer Abbaumeldung einer Empfangsstation und bei einem trotzdem durchführbaren Verbindung zur Erzeugung von Kontrollzellen mit korrigierten Kennungen für die Empfangsstationen vorgesehen, welche vor der die Verbindung zurückgewiesenen oder abgebauten Empfangsstation liegen.

Damit eine Anwender- oder Kontrollzelle zu ihrem Bestimmungsort gelangt, ist es erforderlich, daß im Kopffeld einer Zelle eine Angabe über die Adresse, eine Kennung für eine Verbindung, die Art der Verbindung und die Zellenart vorhanden ist.

Bestimmte Bits im Kopffeld einer Zelle sind nach Normungsvorschlägen bzw. -bestimmungen für den VCI (virtual channel identifier) und für den VPI (virtual path identifier) reserviert. Der VCI gibt eine virtuelle Verbindung und der VPI einen virtuellen Pfad an. Im Kopffeld der Zelle enthalten die für den VCI (virtual channel identifier) reservierten Bits die Information über die Kennung für eine Verbindung, die Art der Verbindung und die Zellenart und die für den VPI (virtual path identifier) reservierten Bits die Information über die Adresse.

Die Erfindung bezieht sich auch auf eine Netzwerkschnittstelle für ein lokales, nach dem asynchronen Transfermodus (ATM) arbeitendes Netzwerk, mit der eine Station und Sende- und Empfangs-Ringanschlüsse gekoppelt sind. Die Netzwerkschnittstelle enthält eine Koppelvorrichtung und eine Steueranordnung enthält und dient zur Weiterleitung von anwenderbezogene Informationen enthaltene Anwenderzellen und wenigstens Signalisierungsinformationen enthaltene Kontrollzellen. Wenn der Steueranordnung eine Sendestation zugeordnet ist, ist sie nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen, die in ihrem Informationsfeld wenigstens eine Information über die Anwender, die Adresse der Sendestation und eine anwenderbezogene Kennung für eine Rückverbindung enthält. Wenn die Steueranordnung einer Empfangsstation zugeordnet ist, dient sie nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle, die in ihrem Informationsfeld wenigstens eine Angabe über die Adresse der zugeordneten Empfangsstation und eine anwenderbezogene Kennung für die Hinverbindung enthält.

Die Erfindung bezieht sich auch auf eine Station mit einer integrierten Netzwerkschnittstelle. Beispielsweise könnte die Netzwerkschnittstelle als Baugruppe in einem Personal-Computer eingebaut sein. Hierbei ist die Karte dann über das Bussystem des Computers mit den restlichen Baugruppen gekoppelt.

Ausführungsbeispiele der Erfindung werden nachstehend anhand der Figuren näher erläutert. Es zeigen:
- Fig. 1: ein lokales Netzwerk,
- Fig. 2: eine in dem lokalen Netzwerk nach Fig. 1 verwendbare Netzwerkschnittstelle mit zugeordneter Station und
- Fig. 3: ein schematisch skizziertes lokales Netzwerk zur Erläuterung des Verbindungsaufbaus und -abbaus.

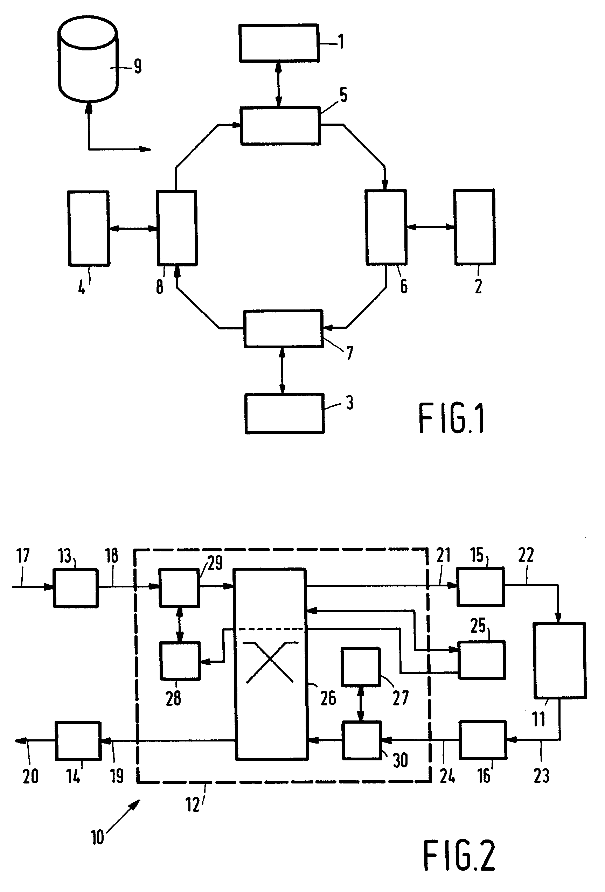

In Fig. 1 ist ein Ausführungsbeispiel eines lokalen Netzwerks mit 4 Stationen 1 bis 4 dargestellt, die jeweils über zugeordnete Netzwerkschnittstellen 5 bis 8 mit Ringanschlüssen gekoppelt sind. Eine Station 1 bis 4 kann beispielsweise ein Bildfernsprecher, ein Personal-Computer oder eine Workstation bzw. ein Fernsprecher sein. Die Nachrichten bzw. Informationen, die von den Stationen 1 bis 4 bzw. den Netzwerkschnittstellen 5 bis 8 stammen, werden nach dem asynchronen Transfermodus mittels Zellen übertragen. Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen. Jede Netzwerkschnittstelle 5 bis 8 ist noch mit einer externen Datenbank 9 gekoppelt, die beispielsweise über die Resourcen der jeweiligen Stationen 1 bis 4 oder über die Netzwerktopologie Auskunft geben kann.

Eine Netzwerkschnittstelle 10 und eine zugeordnete Station 11 sind in der Fig. 2 detaillierter dargestellt. Die Netzwerkschnittstelle 10 enthält eine Koppelvorrichtung 12, die über Pufferspeicher 13 bis 16 mit Ringanschlüssen und der Station 11 gekoppelt ist und den Zellenstrom weitervermittelt.

Der Pufferspeicher 13 ist einerseits mit einem Empfangsanschluß 17 und andererseits mit einem Anschluß 18, der zur Koppelvorrichtung 12 führt, gekoppelt. Der Pufferspeicher 13 erhält noch ein Empfangstaktsignal, welches aus dem Zellenstrom des Empfangs-Ringanschlusses 17 abgeleitet ist und ein internes Taktsignal von einem Taktgenerator der Netzwerkschnittstelle 10 erhält. Der Pufferspeicher 14 ist über einen Anschluß 19 mit der Koppelvorrichtung 12 gekoppelt und liefert einen Zellenstrom an einen Sende-Ringanschluß 20. Dem Pufferspeicher 14 wird das interne Taktsignal und ein Sende-Taktsignal geliefert, welches beispielsweise aus dem internen Taktsignal abgeleitet ist.

Der Pufferspeicher 15, der einen Zellenstrom von der Koppelvorrichtung 12 erhält, ist einerseits über einen Anschluß 21 mit der Koppelvorrichtung 12 und andererseits über einen Anschluß 22 mit der Station 11 gekoppelt. Dem Pufferspeicher 15 wird ebenfalls das interne Taktsignal und ein von der Station 11 geliefertes erstes Stationssignal geliefert. Der Pufferspeicher 16, dem ein Zellenstrom von der Station 11 geliefert wird, ist über einen Anschluß 23 mit der Station 11 und über eine Anschluß 24 mit der Koppelvorrichtung 12 gekoppelt. Dieser Pufferspeicher 16 erhält ein zweites Stations-Taktsignal und das interne Taktsignal. In den Pufferspeichern 13 bis 16 findet jeweils eine Anpassung des Zellenstroms an ein Taktsignal statt. Die Ableitung der verschiedenen Taktsignale aus dem Zellenstrom und die Erzeugung des internen Taktsignals im Taktgenerator sind hier nicht näher dargestellt. Die Stationstaktsignale können beispielsweise gleich dem internen Taktsignal sein. In diesem Fall werden keine Pufferspeicher 15 und 16 benötigt. Das Taktsignal auf einen Ringanschluß des lokalen Netzwerkes mit der kleinsten Frequenz bestimmt die Übertragungskapazität des lokalen Netzwerkes.

In der Netzwerkschnittstelle 10 ist noch eine die Koppelvorrichtung 12 steuernde Steueranordnung 25 enthalten, die beispielsweise zum Verbindungssaufbau und -abbau dient. Die Steueranordnung 25, die als Mikroprozessor realisiert sein kann, kann ebenso wie die Station 11 Zellen erhalten und erzeugen.

In der Koppelvorrichtung 12 ist noch ein Koppelfeld 26, zwei Wegetabellen 27 und 28 und zwei Empfangsschaltungen 29 und 30 enthalten. In der Empfangsschaltung 29 wird das Kopffeld einer über den Anschluß 18 ankommenden Zelle ausgewertet. Eine im Kopffeld enthaltene Kennung und eine Adresse werden als Speicheradresse für die mit der Empfangsschaltung 29 verbundene Wegetabelle 28 verwendet. Die unter der Speicheradresse abgelegte Information wird von der Empfangsschaltung 29 verwendet, um die weitere Verarbeitung und Weiterleitung der Zelle zu organisieren. Beispielsweise kann die Empfangsschaltung 29 die Zelle kopieren und mit einer neuen Adresse versehen. Die Originalzelle wird z.B. über das Koppelfeld 26 an die Station 11 und die kopierte Zelle über das Koppelfeld 26 an den Pufferspeicher 14 gegeben. Es besteht noch die Möglichkeit, daß das Koppelfeld 26 diese Kopierfunktion durchführt.

Die Empfangsschaltung 30 ist über den Anschluß 24 mit dem Pufferspeicher 16 gekopellt und leitet empfangene Zellen zum Koppelfeld 26 weiter. Die Wegetabelle 27, die in ihren Speicherzellen ebenso wie die Wegetabelle 28 Informationen über die Bearbeitung und Weiterleitung von Zellen aufweist, ist mit der Empfangschaltung 30 verbunden.

Über die Ringanschlüsse 17 und 20 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen enthalten. Eine auf dem Empfangs-Ringanschluß 17 (Ringeingang) eintreffende Anwenderzelle kann einerseits zur Station 11 oder andererseits zum Sende-Ringanschluß 20 (Ringausgang) von der Koppelvorrichtung 12 weitergeleitet werden. Eine Anwenderzelle kann in der Koppelvorrichtung 12 auch gelöscht werden. Die Koppelvorrichtung 12 kann auch eine Anwenderzelle zur Station 11 und gleichzeitig zum Sende-Ringanschluß 20 übermitteln. Eine von der Station 11 erzeugte Anwenderzelle wird nur zum Sende-Ringanschluß 20 von der Koppelvorrichtung 12 weitergeleitet.

Kontrollzellen, die von dem Empfangs-Ringanschluß 16 geliefert werden, können zur Station und/oder zum Sende-Ringanschluß 20 gegeben werden. Außerdem kann eine Kontrollzelle noch zur Steueranordnung 25 weitervermittelt werden. Kontrollzellen, die von der Steueranordnung 25 erzeugt werden, können zur Station 11 und/oder zum Sende-Ringanschluß 20 gelangen. Die von der Station 11 gelieferten Kontrollzellen können bei einem Selbsttest auch wieder zur Station 11 zurückgeführt werden.

In der Koppelvorrichtung 12 wird mittels der Empfangsschaltungen 29 und 30 nach Empfang einer Zelle zuerst das Kopffeld einer Zelle ausgewertet. Ist die im Kopffeld enthaltene Adresse nicht gleich der Adresse der Station 11, so wird sie zum Sende-Ringanschluß 20 weitergegeben. Entspricht die Adresse im Kopffeld der Zelle der Adresse der Station 11, so wird diese an die Station 11 und/oder an die Steueranordnung 25 weitergeleitet. Ebenso ist es denkbar, daß die Kontrollzelle auch weiter zum Sende-Ringanschluß 20 gegeben wird.

Bestimmte Bits im Kopffeld einer Zelle sind für den VCI (virtual channel identifier) reserviert. Diese Angabe enthält nach Normungsvorschlägen den Bestimmungsort einer Zelle und gibt damit eine virtuelle Verbindung an. Des weiteren sind bestimmte Bits im Kopffeld der Zelle für den VPI (virtual path identifier) reserviert. Der VPI enthält Informationen über die Adresse bzw. den Bestimmungsort. Der VCI kann die Angabe über die anwenderbezogene Kennung für eine Verbindung, die Art der Verbindung und die Zellenart enthalten.

Für den VPI sind im Kopffeld der Zelle nach derzeitigen Normungsbestimmungen 8 Bit und für den VCI 16 Bit vorgesehen. Ein Bit des VCI kann für die Angabe verwendet werden, ob es sich um eine Kontrollzelle oder um eine Anwenderzelle handelt. Wenigstens zwei weitere Bits können die Art der Verbindung angeben. Es kann eine Einzel-Verbindung (unicast-connection), eine Mehrfach-Verbindung (multicast-connection) oder eine Verteil-Verbindung (broadcast-connection) vorliegen. Bei einer Einzel-Verbindung oder Endezu-Ende-Verbindung besteht eine virtuelle Verbindung eines Anwenders einer ersten Station mit einem Anwender einer zweiten Station. Bei einer Mehrfach-Verbindung oder Punktzu-Multipunkt-Verbindung sind mehrere Anwender von Stationen miteinander verbunden. Bei einer Verteil-Verbindung liefert eine Sendestation an alle zwischen der Sendestation und der letzten Empfangsstation liegenden Stationen Zellen mit gleichem Inhalt im Informationsfeld. Die restlichen 12 Bits des VCI können für eine anwenderbezogene Kennung für eine Verbindung dienen. Die anwenderbezogene Kennung und die Adresse geben eine virtuelle Verbindung (entweder Hin- oder Rückverbindung) an, aus der eine Koppelvorrichtung die Information entnimmt, daß eine Zelle mit dieser Kennung und dieser Adresse ein Anwender beispielsweise ihrer Station ist.

Mit Hilfe von Steuerungsabläufen wird im folgenden erläutert, wie die Steueranordnung 25 einer Netzwerkschnittstelle 10 arbeitet. Zuerst wird dabei der Aufbau einer Einzel-Verbindung von einer Station EX zu einer Station EY erläutert.

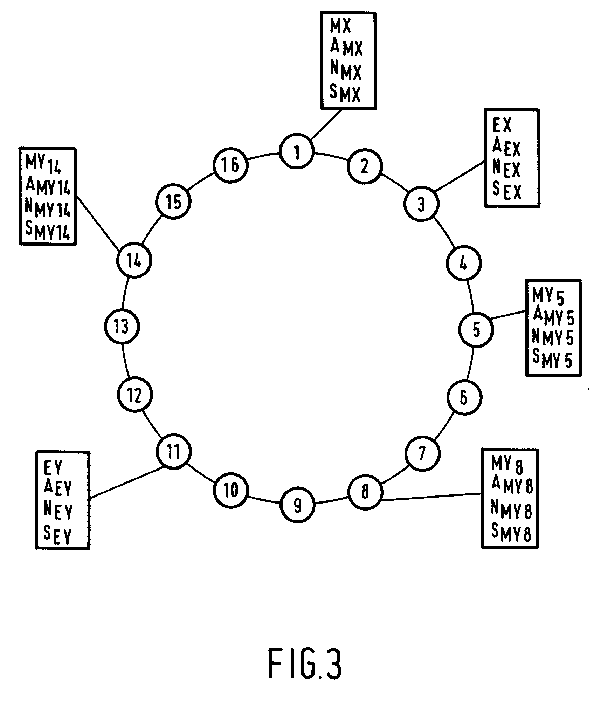

In Fig. 3 ist ein lokales Netzwerk mit insgesamt 16 Stationen skizziert. Beispielsweise kann die Station 3 eine Sendestation EX sein, deren Anwender A_{EX} mit dem Anwender A_{EY} der Station 11, die eine Empfangsstation EY darstellt eine Einzel-Verbindung aufnehmen möchte. Der Sendestation EX ist eine Netzwerkschnittstelle N_{EX} und eine Steueranordnung S_{EX} und der Empfangsstation EY ist eine Netzwerkschnittstelle N_{EY} und eine Steueranordnung S_{EY} zugeordnet. Die Steueranordnung S_{EX} hat den folgenden Steuerablauf für eine Einzel-Verbindung:

Ist eine Kontrollzelle mit einem Verbindungswunsch eines Anwenders A_{EX} der Station EX eingetroffen? 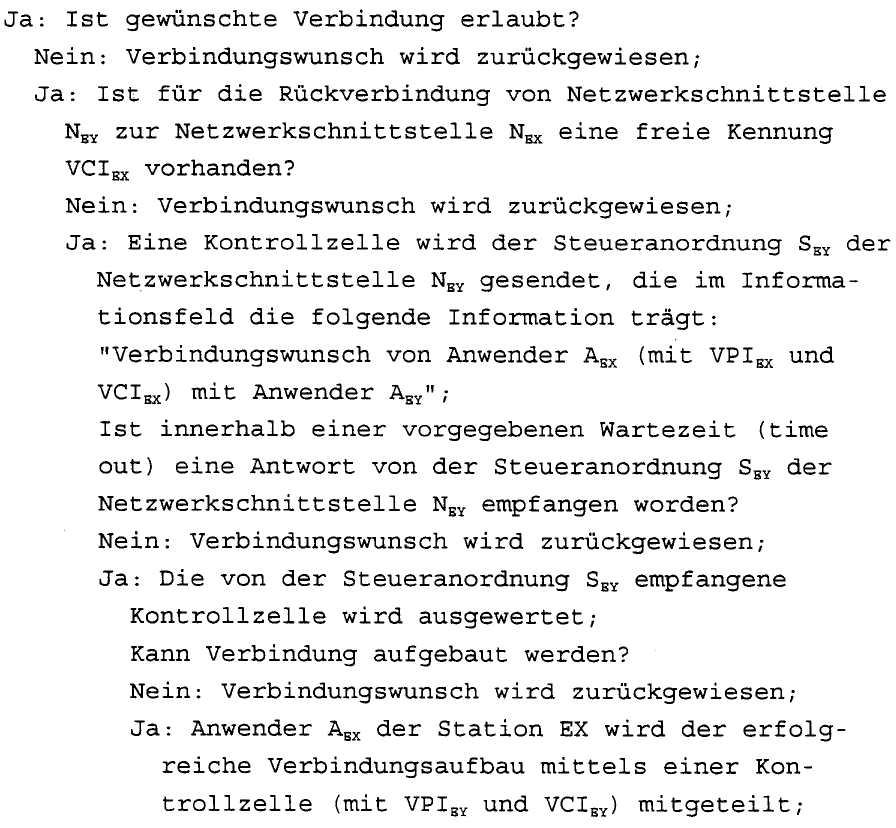
Zuerst wird überprüft, ob eine Kontrollzelle eingetroffen ist, die einen Verbindungswunsch eines Anwenders A_{EX} der Station EX beinhaltet. Ist dies der Fall, wird beispielsweise an eine externe Datenbank (vgl. Fig. 1, Datenbank 9) oder an einen internen Speicher der Netzwerkschnittstelle N_{EX} die Anfrage gestellt, ob eine solche Verbindung erlaubt ist. Beispielsweise wird durch die Anfrage überprüft, ob die an der Verbindung zu beteiligende Station EY die gewünschten Resourcen aufweist. Wenn eine solche Verbindung nicht erlaubt ist, wird der Verbindungswunsch zurückgewiesen.

Der Anwender A_{EX} der Station EX (Station 3) möchte eine Verbindung mit dem Anwender A_{EY} der Station Y (Station 11) eingehen. Es wird als nächstes von der Steueranordnung S_{EX} überprüft, ob für die Rückverbindung von der Netzwerkschnittstelle N_{EY} zur Netzwerkschnittstelle N_{EX} eine freie Kennung vorhanden ist. Beispielsweise kann es schon so viele virtuelle Verbindungen geben, daß eine weitere Verbindung mit der Station EY nicht möglich ist. Ist dies der Fall wird der Verbindungswunsch zurückgewiesen. Dabei wird der Station EX eine Kontrollzelle mit einer Zurückweisung des Verbindungswunsches übertragen. Falls für die Rückverbindung eine freie Kennung vorhanden ist wird der Steueranordnung S_{EY} der Netzwerkschnittstelle N_{EY} eine Kontrollzelle gesendet, die der Steueranordnung S_{EY} mitteilt, daß der Anwender A_{EX} einen Verbindungswunsch mit dem Anwender A_{EY} hat und daß dem Anwender A_{EX} die Adresse VPI_{EX} und die Kennung VCI_{EX} zugeordnet ist.

Falls innerhalb einer vorgegebenen Wartezeit (time out) eine Antwort von der Steueranordnung S_{EY} nicht eingegangen ist, wird der Station EX mittels einer Kontrollzelle die Mitteilung gemacht, daß der Verbindungswunsch zurückgewiesen wird. Falls die Steueranordnung S_{EX} eine Kontrollzelle von der Steueranordnung S_{EY} empfangen hat, wird diese ausgewertet und überprüft, ob die Steuerschaltung S_{EY} mitgeteilt hat, daß die Verbindung aufgebaut werden kann. Falls dies nicht der Fall ist, wird der Verbindungswunsch zurückgewiesen und einen entsprechende Meldung an die Station EX gesandt. Sonst wird dem Anwender A_{EX} der erfolgreiche Verbindungsaufbau übertragen.

Die Maßnahmen beim Aufbau der Einzel-Verbindung der Steueranordnung S_{EY} der Netzwerkschnittstelle N_{EY} lassen sich durch folgenden Steuerungsablauf angeben:
Ist eine Kontrollzelle von der Netzwerkschnittstelle N_{EX} eingetroffen? 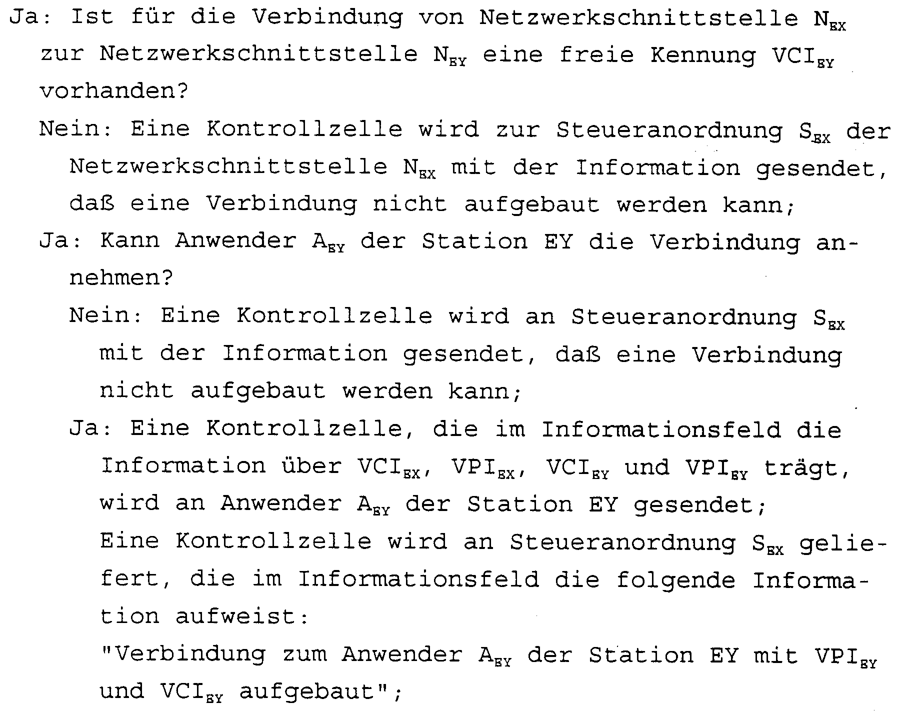
Wenn eine Kontrollzelle von der Netzwerkschnittstelle N_{EX} in der Steueranordnung S_{EY} eingetroffen ist, wird überprüft ob für diese Verbindung eine freie Kennung VCI_{EY} (für Hinverbindung) vorhanden ist. Ist dies nicht der Fall wird mittels einer Kontrollzelle der Steueranordnung S_{EX} mitgeteilt, daß eine Verbindung nicht aufgebaut werden kann. Wenn eine solche Verbindung aufgebaut werden kann, wird der Anwender A_{EY} der Station EY gefragt, ob dieser die Verbindung annimmt. Wenn er eine solche Verbindung nicht annehmen kann oder will, wird ebenfalls eine Kontrollzelle zur Steueranordnung S_{EX} mit der Information gesandt, daß die Verbindung nicht möglich ist. Im anderen Fall wird eine Kontrollzelle zum Anwender A_{EY} der Station EY gesendet, die eine Information über die Adresse VPI_{EX} des Anwenders A_{EX}, die Kennung VCI_{EX} für die Rückverbindung, die Adresse VPI_{EY} und die Kennung VCI_{EY} der Hinverbindung enthält. Eine Kontrollzelle wird ebenfalls an die Steueranordnung S_{EX} geliefert, die die Information aufweist, daß die Verbindung zum Anwender A_{EY} mit der Adresse VPI_{EY} und der Kennung VCI_{EX} aufgebaut ist.

Beim Abbau einer Einzel-Verbindung führt die Steueranordnungen S_{EX}, die der Station X zugeordnet ist und die Steueranordnung S_{EY}, die der Station Y zugeordnet ist, jeweils den folgenden Steuerungsablauf durch:

Ist über eine Kontrollzelle eine Abbauforderung der Verbindung des Anwender A_{EX} der Station EX eingetroffen? 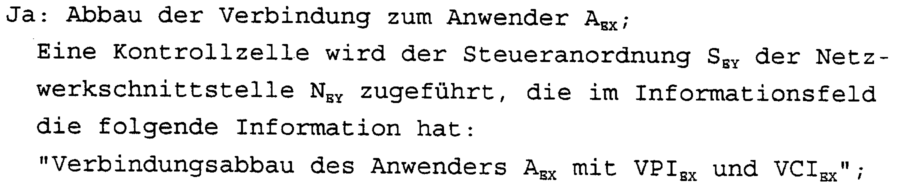
Ist eine Kontrollzelle von der Steueranordnung S_{BY} mit einer Bestätigung über den Abbau empfangen worden? 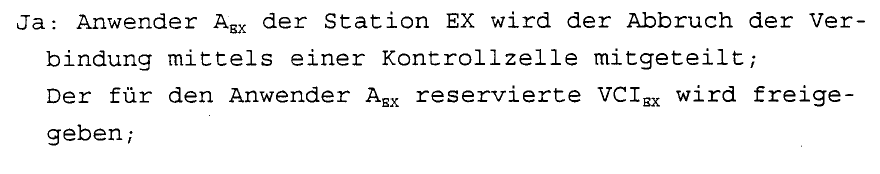
Ist von der Steueranordnung S_{EX} eine Kontrollzelle mit einer Abbauforderung der Rückverbindung von der Netzwerkschnittstelle N_{EY} zur Netzwerkschnittstelle N_{EX} eingetroffen? 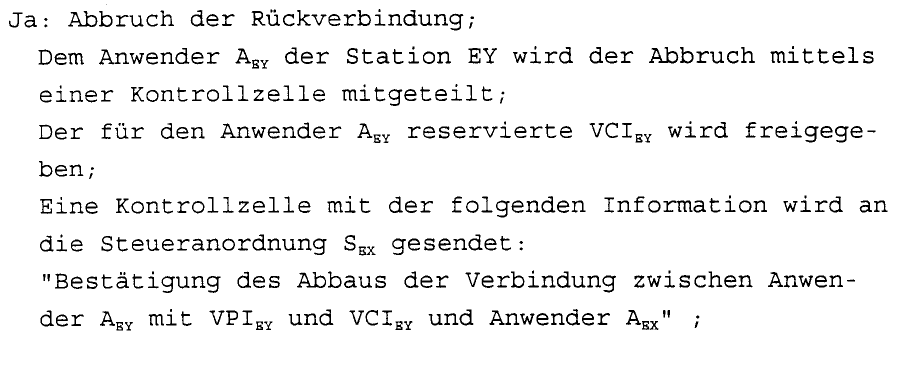
Wenn eine Kontrollzelle mit einer Abbauforderung der Verbindung des Anwenders A_{EX} eingetroffen ist, wird zuerst die Verbindung zum Anwender A_{EX} abgebaut. Dann wird eine Kontrollzelle von der Steueranordnung S_{EX} der Steueranordnung S_{EY} zugeführt, die mitteilt, daß der Anwender A_{EX}, der die Adresse VPI_{EX} und die Kennung VCI_{EX} aufweist, die Verbindung abbauen möchte. Wenn eine Kontrollzelle von der Steueranordnung S_{EY} mit einer Bestätigung über den Abbau empfangen worden ist, wird dem Anwender A_{EX} der Abbruch mittels eine Kontrollzelle mitgeteilt und die für den Anwender A_{EX} reservierte Kennung VCI_{EX} wird freigegeben.

Wenn die Steueranordnung S_{EY} von der Steueranordnung S_{EX} eine Kontrollzelle empfängt, in der eine Abbauforderung der Rückverbindung von der Netzwerkschnittstelle N_{EY} zur Netzwerkschnittstelle N_{EX} eingetroffen ist, wird die Rückverbindung abgebrochen Dem Anwender A_{EY} wird der Abbruch mitgeteilt und die für den Anwender A_{EY} reservierte Kennung VCI_{EY} freigegeben. Zum Schluß wird noch eine Kontrollzelle an die Steueranordnung S_{EX} gesendet, in der eine Bestätigung des Abbaus zwischen dem Anwender A_{EY} und dem Anwender A_{EX} enthalten ist.

Die hier dargestellten Steuerungsabläufe für den Verbindungsabbau der Steuerungsanordnungen S_{EX} und S_{EY} werden jeweils von der anderen Steueranordnung verwendet, wenn der Anwender A_{EY} die Verbindung zuerst abbricht.

Als nächstes werden die Steuerungsabläufe der an einer Mehrfach-Verbindung beteiligten Steueranordnungen aufgeführt. Hierbei kann beispielsweise eine Verbindung der Station 1 (vergleiche Fig. 3) mit den Stationen 5, 8 und 14 vorgenommen werden. Die Station 1 ist die Sendestation MX mit einem Anwender A_{MX} einer zugeordneten Netzwerkschnittstelle N_{MX} und einer zugeordneten Steueranordnung S_{MX}. Der Anwender wünscht einen Verbindungsaufbau mit den Anwendern A_{MY5} der Station MY₅, dem Anwender A_{MY8} der Station MY_{Y8} und dem Anwender A_{MY14} der Station MY₁₄. Der Steuerungsablauf der Steueranordnung S_{MX}, die der Sendestation MX (Station 1) zugeordnet ist, ist unten aufgeführt:
Ist über eine Kontrollzelle ein Verbindungswunsch eines Anwenders A_{MX} der Station MX zu mehreren ausgewählten Anwendern A_{MYi} der Stationen Y_{Mi}, i=1,...,N, eingetroffen? 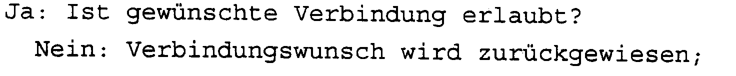 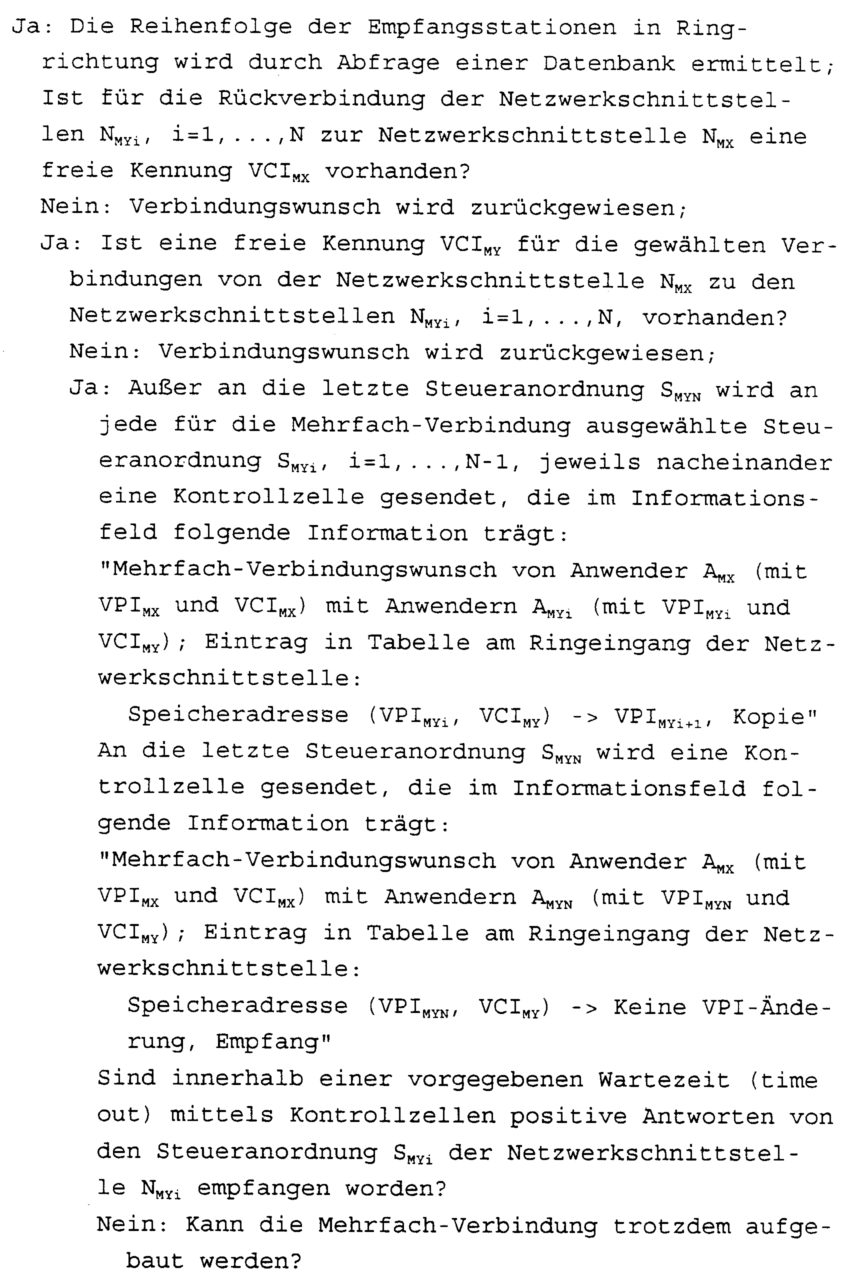 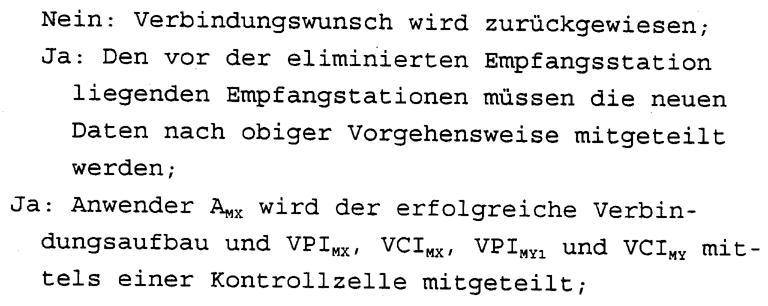
Wenn eine Kontrollzelle einen Verbindungswunsch eines Anwenders A_{MX} der Sendestation MX zu mehreren ausgewählten Anwendern A_{MYi} der Empfangsstationen MYi zur Steueranordnung S_{MX} geleitet hat, wird durch eine Anfrage beispielsweise an eine externe Datenbank geprüft, ob diese Verbindung erlaubt ist. Wenn eine solche Verbindung nicht möglich ist, wird der Verbindungswunsch zurückgewiesen. Im anderen Fall wird durch Anfrage an eine externe Datenbank (z.B. des Netzwerkmanagements) oder an einen internen Speicher in der Netzwerkschnittstelle N_{MX} die Reihenfolge der Empfangsstationen in der Ringrichtung ermittelt. Anschließend wird überprüft, ob für die Rückverbindung der Netzwerkschnittstellen N_{MYi} zur Netzwerkschnittstelle N_{MX} eine freie anwenderbezogene Kennung VCI_{MX} für die Rückverbindung vorhanden ist. Ist dies nicht der Fall, wird der Verbindungswunsch zurückgewiesen, indem dem Anwender A_{MX} mittels einer Kontrollzelle die Zurückweisung mitgeteilt wird.

Wenn eine freie Kennung vorhanden ist, wird als nächstes überprüft, ob eine frei Kennung VCI_{MY} vorhanden ist. Diese anwenderbezogenen Kennungen für die Hinverbindung zu den einzelnen Empfangsstationen setzen sich aus einer laufenden Nummer und einer sendestationsbezogenen Nummer zuMehrfach-Verbindung die- Kennung für die Hinverbindung von der Steuerschaltung S_{MX} der Sendestation vergeben. Falls eine solche freie Kennung nicht gefunden wird, wird dem Anwender A_{MX} mitgeteilt, daß ein Verbindungsaufbau nicht möglich ist. Falls eine solche freie Kennung VCI_{MY} gefunden wird, wird von der Steueranordnung S_{MX} an jede einer Empfangsstation MYᵢ zugeordnete Steueranordnung S_{MYi} jeweils nacheinander eine Kontrollzelle gesendet.

Die Kontrollzelle, die an die letzte Empfangsstation MY_{N} der Mehrfach-Verbindung (also an die Station 14) gesendet wird, enthält die Information, daß der Anwender A_{MX} mit der Adresse VPI_{MX} und der Kennung VCI_{MX} für die Rückverbindung mit dem Anwender A_{MYN} mit der Adresse VPI_{MYN} und der Kennung VCI_{MY} für die Hinverbindung einen Mehrfach-Verbindungswunsch hat. Außerdem soll in die Wegetabelle am Ringeingang der Netzwerkschnittstelle unter der Speicheradresse des VPI_{MYN} und VCI_{MY} eingetragen werden, daß keine Änderung des VPI für die nächste Station erfolgen soll und ein Empfangsbefehl einer Anwenderzelle für die Station VPI_{MYN} vorliegt. Für die Steueranordnungen der anderen Netzwerkschnittstellen, also für die Netzwerkschnittstellen der Stationen 5 und 8 ist in dem Informationsfeld der Kontrollzelle eingetragen, daß ein Mehrfach-Verbindungswunsch von Anwender A_{MX} mit dem Anwender A_{MYi} vorliegt und daß in die Wegetabelle am Ringeingang der Netzwerkschnittstelle unter der Speicheradresse von VPI_{MYi} und VCI_{MY} ein Kopierbefehl für eine Anwenderzelle und eine Änderung der Adresse für die kopierte Anwenderzelle erfolgen soll. Als neue Adresse wird die nächste an der Mehrfach-Verbindung beteiligte Empfangsstation eingetragen.

Die Steueranordnung S_{MX} wartet bis zu einer vorgegebenen Wartezeit, ob positive Antworten von den Steueranordnungen S_{MYi} empfangen worden sind. Wenn das nicht der Fall ist, wird überprüft, ob die Mehrfach-Verbindung trotzdem aufgebaut werden kann. Ist das nicht möglich, wird der Verbindungswunsch des Anwenders A_{MX} zurückgewiesen. Wenn eine Verbindung trotz einer Zurückweisung des Verbindungswunsches einer Empfangsstation möglich ist, wird den vor der eliminierten Empfangsstation liegenden Empfangsstationen Kontrollzellen mit neuen Informationen nach der obigen Verfahrensweise mitgeteilt. Falls von den Steueranordnungen S_{MYi} positive Antworten empfangen worden sind, wird dem Anwender A_{MX} der erfolgreiche Verbindungsaufbau mitgeteilt und die entsprechenden Adressen und Kennungen (VPI_{MX}, VCI_{MX}, VPI_{MY1} und VCI_{MY}).

Im folgenden wird der Steuerungsablauf für eine Steueranordnung S_{MYi}, die einer an einer Mehrfach-Verbindung beteiligten Empfangsstation MYᵢ zugeordnet ist, gezeigt:
Ist eine Kontrollzelle von der Netzwerkschnittstelle N_{MX} eingetroffen? 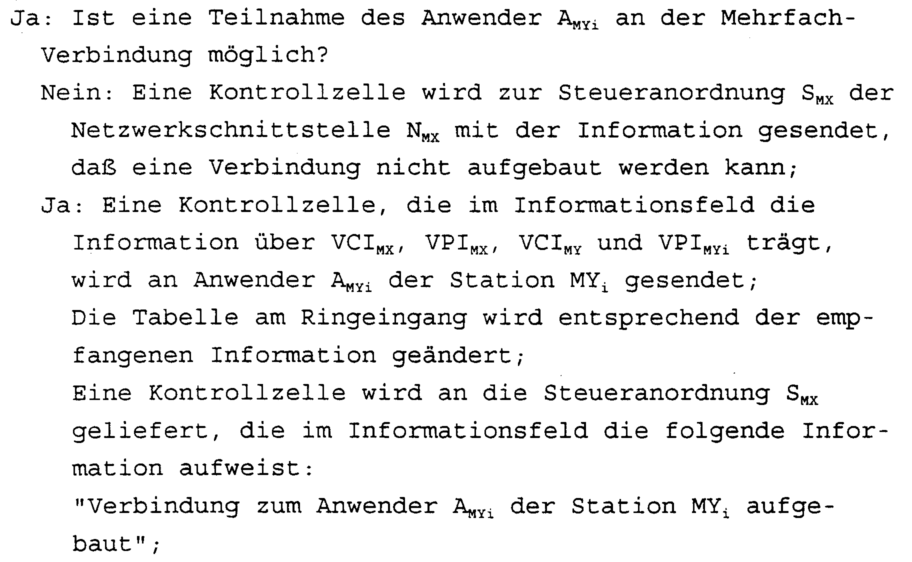
Wenn eine Kontrollzelle von der Netzwerkschnittstelle N_{MX} eingetroffen ist, wird zuerst überprüft, ob eine Teilnahme des Anwenders A_{MYi} an der Mehrfach-Verbindung möglich ist. Ist dies nicht der Fall, wird eine Kontrollzelle von der Steueranordnung S_{Yi} zur Steueranordnung S_{MX} mit der Information gesendet, daß eine Verbindung nicht aufgebaut werden kann. Sonst wird eine Kontrollzelle, die im Informationsfeld die Information über die anwenderbezogenen Kennungen VCI_{MX} und VCIM_{Y} und die Adressen VPI_{MX} und VPI_{MYi} enthält, an den Anwender A_{MYi} der Station MYᵢ gesendet. Die Wegetabelle am Ringeingang wird entsprechend der empfangenen Information geändert. Zum Schluß wird noch eine Kontrollzelle an die Steueranordnung S_{MX} geliefert, die angibt, daß die Verbindung zum Anwender A_{MYi} der Station MYᵢ aufgebaut ist.

Bei einem Abbau der Mehrfach-Verbindung, die von dem Anwender A_{MX} der Sendestation MX gewünscht ist, wird von der Steueranordnung S_{MX} der folgende Steuerungsablauf durchgeführt:
Ist über eine Kontrollzelle eine Abbauforderung der Mehrfach-Verbindung des Anwender A_{MX} der Station MX eingetroffen? 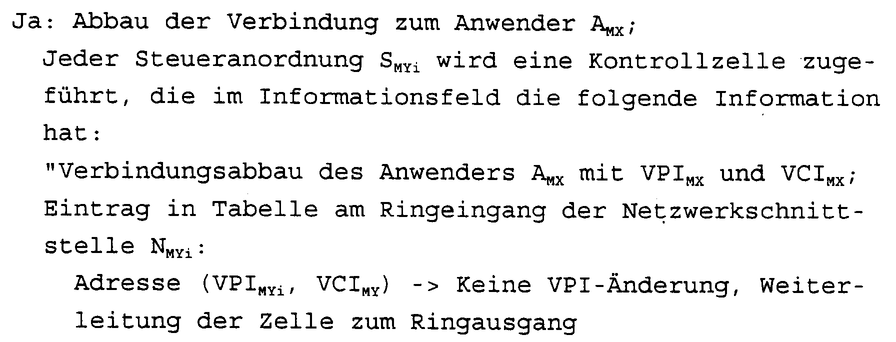
Sind Kontrollzellen von jeder an der Mehrfach-Verbindung beteiligten Steueranordnung S_{MYi} mit einer Bestätigung über den Abbau empfangen worden? 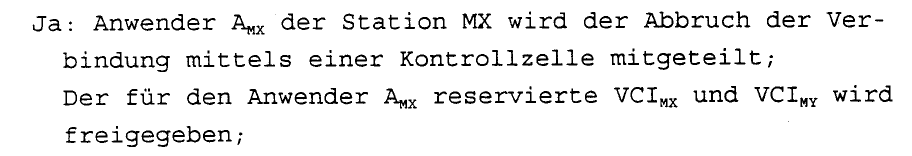
Wenn mittels einer Kontrollzelle eine Abbauforderung der Mehrfach-Verbindung des Anwenders A_{MX} eingetroffen ist, wird zuerst die Verbindung zum Anwender A_{MX} abgebaut und anschließend eine Kontrollzelle zu jeder Steueranordnung S_{MYi} geführt, die angibt, daß die Verbindung des Anwenders A_{MX}, dem die Kennung VCI_{MX} und die Adresse VPI_{MX} zugeordnet ist, abgebaut wird. Die Tabelle am Ringeingang der Netzwerkschnittstelle N_{MYi} soll ebenfalls geändert werden. Unter der Speicheradresse, die durch die Kennung VCI_{MY} und VPI_{MYi} gekennzeichnet ist, wird eingetragen, daß keine VPI-Änderung erfolgen soll und eine ankommende Anwenderzelle direkt zum Ringausgang weitergegeben wird.

Wenn die Kontrollzellen von jeder an einer Mehrfach-Verbindung beteiligten Steueranordnung S_{MYi} mit einer Bestätigung über den Abbau empfangen worden sind, wird dem Anwender A_{MX} der Abbruch der Verbindungen mittels einer Kontrollzelle mitgeteilt. Anschließend werden die Kennungen VCI_{MX} und VCI_{MY} freigegeben.

Der Steuerablauf für den Abbau einer Verbindung in der Steueranordnung S_{MYi}, die einer Empfangsstation zugeordnet ist, sieht folgendermaßen aus:
Ist von der Steueranordnung S_{MX} eine Kontrollzelle mit einer Abbauforderung der Rückverbindung eingetroffen? 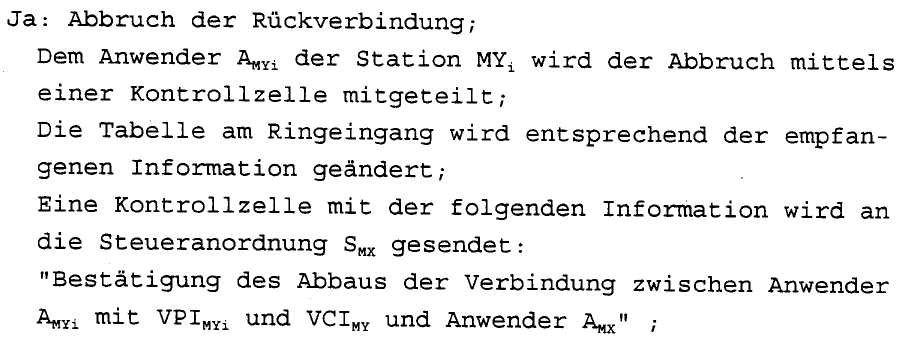
Wenn eine Kontrollzelle von der Steueranordnung S_{MX} mit einer Abbauforderung für die Rückverbindung eingetroffen ist, wird die Rückverbindung abgebrochen und dem Anwender A_{MYi} der Station MYᵢ der Abbruch mittels einer Kontrollzelle mitgeteilt. Die Tabelle am Ringeingang wird entsprechend der empfangenen Information geändert. Eine Kontrollzelle mit der Bestätigung des Abbaus der Verbindung wird anschließend der Steueranordnung S_{MX} gesendet.

Falls die Abbauforderung von einer an der Mehrfach-Verbindung beteiligten Empfangsstation ausgeht, wird in der Steuerschaltung S_{MX} zuerst geprüft, ob die Mehrfach-Verbindung trotzdem noch aufrechterhalten werden kann. Ist dies nicht der Fall, wird die Mehrfach-Verbindung nach dem obigen Ablauf abgebaut. Im anderen Fall wird die Verbindung mit den Empfangsstationen neu aufgebaut, die vor der die Verbindung abbauenden Empfangsstation liegen.

## Patentansprüche

1. Lokales, nach dem asynchronen Transfermodus (ATM) arbeitendes Netzwerk mit mehreren Stationen (1 bis 4), die jeweils über eine Netzwerkschnittstelle (5 bis 8), welche eine Koppelvorrichtung (12) und eine Steueranordnung (25) enthält, mit Sende- und Empfangs-Ringanschlüssen (17, 20) gekoppelt sind und die zur Übertragung von anwenderbezogene Informationen enthaltene Anwenderzellen und wenigstens Signalisierungsinformationen enthaltene Kontrollzellen vorgesehen sind,
dadurch gekennzeichnet,
daß die einer Sendestation zugeordnete Steueranordnung (25) nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen ist, die in ihrem Informationsfeld wenigstens eine Information über die Anwender, die Adresse der Sendestation und eine anwenderbezogene Kennung für eine Rückverbindung enthält, und daß wenigstens eine einer Empfangsstation zugeordnete Steueranordnung (25) nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle vorgesehen ist, die in ihrem Informationsfeld wenigstens eine Angabe über die Adresse der zugeordneten Empfangsstation und eine anwenderbezogene Kennung für die Hinverbindung enthält.

2. Lokales Netzwerk nach Anspruch 1,
dadurch gekennzeichnet,
daß die einer Empfangsstation zugeordnete Steueranordnung (25) nach Empfang einer Kontrollzelle mit einem Verbindungswunsch eines Anwenders der Sendestation mit der Empfangsstation bei einer durchführbaren Einzel-Verbindung zur Bestimmung der anwenderbezogenen Kennung für die Hinverbindung der Sendestation zur Empfangsstation und zur Erzeugung einer zur Sendestation zu sendenden Kontrollzelle wenigstens mit der anwenderbezogenen Kennung vorgesehen ist.

3. Lokales Netzwerk nach Anspruch 1 oder 2,
dadurch gekennzeichnet,
daß die einer Sendestation zugeordnete Steueranordnung (25) nach Empfang einer Kontrollzelle mit einem Verbindungswunsch eines Anwenders der Sendestation zu jeweils wenigstens einem Anwender mehrerer Empfangsstationen bei einer durchführbaren Mehrfach-Verbindung zur Bestimmung der anwenderbezogenen Kennungen für die Hin- und Rückverbindungen der Sendestation zu den Empfangsstationen und zur Erzeugung von zu den Empfangsstationen zu sendenden Kontrollzellen vorgesehen ist, die jeweils wenigstens die anwenderbezogenen Kennungen enthalten,
daß die einer Empfangsstation zugeordnete Steueranordnung (25) nach Empfang einer Kontrollzelle mit einem Verbindungswunsch eines Anwenders der Sendestation und dieser und weiteren Empfangsstationen bei einer durchführbaren Verbindung mit der Empfangsstation zur Speicherung der anwenderbezogenen Kennung und zur Erzeugung einer zur Sendestation zu sendenden Kontrollzelle mit einer Verbindungsbestätigung vorgesehen ist und
daß beim Verbindungsaufbau einer Mehrfach-Verbindung die der Sendestation zugeordnete Steueranordnung (25) nacheinander zur Erzeugung von Kontrollzellen für jede Empfangsstation vorgesehen ist.

4. Lokales Netzwerk nach Anspruch 2 oder 3,
dadurch gekennzeichnet,
daß die einer Sende- oder Empfangsstation zugeordnete Steueranordnung (25) bei einer nicht durchführbaren Verbindung zur Erzeugung einer Kontrollzelle mit einer Mitteilung über die Zurückweisung des Verbindungswunsches für die Sende- oder Empfangsstation vorgesehen ist.

5. Lokales Netzwerk nach einem der Ansprüche 1 bis 4,
dadurch gekennzeichnet,
daß die Koppelvorrichtung (12) jeder Netzwerkschnittstelle (10) Empfangsschaltungen (29, 30), Wegetabellen (27, 28) und ein Koppelfeld (26) enthält,
daß die Empfangsschaltung (29, 30) wenigstens zur Entnahme der Kennung und der Adresse aus dem Kopffeld einer eintreffenden Zelle und zur Entnahme von Steuerungsinformationen über die Bearbeitung und Weiterleitung der eingetroffenen Zelle anhand der Kennung und Adresse aus der Wegetabelle (27, 28) vorgesehen ist, daß die einer Empfangsstation zugeordnete Steueranordnung (25) nach Eintreffen einer Kontrollzelle für eine Mehrfach-Verbindung
- zur Entnahme eines Bearbeitungsmodus über die Weiterleitung von Anwenderzellen, der Kennung und der Adresse aus dem Informationsfeld der Kontrollzelle und
- zur Abspeicherung des Bearbeitungsmodus unter der Wegetabellen-Adresse der Kennung und der Adresse in der mit den Empfangs-Ringanschlüssen (17) gekoppelten Wegetabelle (29) vorgesehen ist und
daß die der letzten Empfangsstation in der Mehrfach-Verbindung zugeordnete Steueranordnung (25) zur Abspeicherung eines Bearbeitungsmodus in die mit dem Empfangs-Ringanschluß (17) gekoppelte Wegetabelle (29) vorgesehen ist, bei dem die zu empfangende Anwenderzelle zur Weiterleitung an die Empfangsstation bestimmt ist,
und die einer anderen Empfangsstation in der Mehrfach-Verbindung zugeordnete Steueranordnung (25) zur Abspeicherung eines Bearbeitungsmodus in die mit dem Empfangs-Ringanschluß (17) gekoppelte Wegetabelle (29) vorgesehen ist, bei dem die zu empfangende Anwenderzelle zur Weiterleitung an die Empfangsstation, zur Verdopplung der Anwenderzelle und zur Veränderung der Adresse in der verdoppelten Anwenderzelle bestimmt ist.

6. Lokales Netzwerk nach einem der Ansprüche 2 bis 5,
dadurch gekennzeichnet,
daß die an einer Einzel-Verbindung beteiligte Steueranordnung (25) einer Netzwerkschnittstelle (10) nach Empfang einer Abbauforderung von einem Anwender der zugeordneten Station zur Sendung einer Kontrollzelle mit einer Meldung über den Verbindungsabbau an die andere an der Einzel-Verbindung beteiligten Steueranordnung (25) der anderen Netzwerkschnittstelle (10) und zum Empfang einer Kontrollzelle mit einer Bestätigung über den Verbindungsabbau der anderen Steueranordnung (25) vorgesehen ist.

7. Lokales Netzwerk nach einem der Ansprüche 3 bis 6,
dadurch gekennzeichnet,
daß die an einer Mehrfach-Verbindung beteiligte und einer Sendestation zugeordnete Steueranordnung (25) nach Empfang einer Abbauforderung von einem Anwender der Sendestation zur Sendung einer Kontrollzelle mit einer Meldung über den Verbindungsabbau an die den Empfangsstationen zugeordneten Steueranordnungen und zum Empfang von Kontrollzellen mit einer Bestätigung über den Verbindungsabbau der jeder Empfangsstation zugeordneten Steueranordnung (25) vorgesehen ist,
daß nach dem Verbindungsabbau einer Mehrfach-Verbindung die an der Mehrfach-Verbindung beteiligten den Empfangsstationen zugeordneten Steueranordnungen (25) jeweils zur Änderung des unter der Adresse einer Kennung und Adresse abgespeicherten Bearbeitungsmodus in der zugeordneten mit dem jeweiligen Empfangs-Ringanschluß (17) gekoppelten Wegetabelle (29) vorgesehen sind und
daß bei einer Mehrfach-Verbindung die einer Sendestation zugeordnete Steueranordnung (25) nach Empfang einer Kontrollzelle mit einer Zurückweisung einer Verbindung oder einer Abbaumeldung einer Empfangsstation und bei einem trotzdem durchführbaren Verbindung zur Erzeugung von Kontrollzellen mit korrigierten Kennungen für die Empfangsstationen vorgesehen ist, welche vor der die Verbindung zurückgewiesenen oder abgebauten Empfangsstation liegen.

8. Lokales Netzwerk nach einem der Ansprüche 1 bis 7,
dadurch gekennzeichnet,
daß im Kopffeld einer Zelle eine Angabe über die Adresse, eine Kennung für eine Verbindung, die Art der Verbindung und die Zellenart vorgesehen ist.

9. Lokales Netzwerk nach Anspruch 8,
dadurch gekennzeichnet,
daß im Kopffeld der Zelle die für den VCI (virtual channel identifier) reservierten Bits die Information über die Kennung für eine Verbindung, die Art der Verbindung und die Zellenart und die für den VPI (virtual path identifier) reservierten Bits die Information über die Adresse enthalten.

10. Netzwerkschnittstelle (10) für ein lokales, nach dem asynchronen Transfermodus (ATM) arbeitendes Netzwerk, mit der eine Station (11) und Sende- und Empfangs-Ringanschlüsse (17, 20) gekoppelt sind, die eine Koppelvorrichtung (12) und eine Steueranordnung (25) enthält und die zur Weiterleitung von anwenderbezogene Informationen enthaltene Anwenderzellen und wenigstens Signalisierungsinformationen enthaltene Kontrollzellen vorgesehen ist,
dadurch gekennzeichnet,
daß die Steueranordnung (25), wenn sie einer Sendestation zugeordnet ist, nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen ist, die in ihrem Informationsfeld wenigstens eine Information über die Anwender, die Adresse der Sendestation und eine anwenderbezogene Kennung für eine Rückverbindung enthält, und
daß die Steuerartordnung (25), wenn sie einer Empfangsstation zugeordnet ist, nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle vorgesehen ist, die in-ihrem Informationsfeld wenigstens eine Angabe über die Adresse der zugeordneten Empfangsstation und eine anwenderbezogene Kennung für die Hinverbindung enthält.

11. Station mit einer Netzwerkschnittstelle (10) für ein lokales, nach dem asynchronen Transfermodus (ATM) arbeitendes Netzwerk, mit der eine Station (11) und Sende- und Empfangs-Ringanschlüsse (17, 20) gekoppelt sind, die eine Koppelvorrichtung (12) und eine Steueranordnung (25) enthält und die zur Weiterleitung von anwenderbezogene Informationen enthaltene Anwenderzellen und wenigstens Signalisierungsinformationen enthaltene Kontrollzellen vorgesehen ist,
dadurch gekennzeichnet,
daß die Steueranordnung (25), wenn sie einer Sendestation zugeordnet ist, nach Empfang einer von der Sendestation gelieferten Kontrollzelle mit einem durchführbaren Wunsch für eine Einzel- oder Mehrfach-Verbindung eines Anwenders der Sendestation mit einem Anwender wenigstens einer Empfangsstation zur Erzeugung wenigstens einer zu einer Empfangsstation zu sendenden Kontrollzelle vorgesehen ist, die in ihrem Informationsfeld wenigstens eine Information über die Anwender, die Adresse der Sendestation und eine anwenderbezogene Kennung für eine Rückverbindung enthält, und
daß die Steueranordnung (25), wenn sie einer Empfangsstation zugeordnet ist, nach Empfang einer von der Sendestation gelieferten Kontrollzelle mit einem durchführbaren Verbindungswunsch eines Anwenders der Empfangsstation zur Erzeugung einer zur Sendestation zu sendenden Kontrollzelle vorgesehen ist, die in ihrem Informationsfeld wenigstens eine Angabe über die Adresse der zugeordneten Empfangsstation und eine anwenderbezogene Kennung für die Hinverbindung enthält.
